# NEUE EUROPÄISCHE PATENTSCHRIFT

(11) **EP 1 042 958 B2**
(45) Veröffentlichungstag und Bekanntmachung des Hinweises auf die Entscheidung über den Einspruch: **29.10.2014**
(45) Hinweis auf die Patenterteilung: 11.03.2009
(21) Anmeldenummer: 00107066.3
(22) Anmeldetag: 04.04.2000
(51) Int. Cl.: A22C 13/00

(54) **Nahrungsmittelhülle auf Cellulosehydratbasis mit einer Trennpräparation auf der Innenseite**
Food casing based on cellulose hydrate having a release preparation on the inside
Enveloppes pour aliments à base d'hydrate de cellulose ayant une composition de décollage à la surface interne

(30) Priorität: 09.04.1999 DE 19916121
(43) Veröffentlichungstag der Anmeldung: 11.10.2000
(73) Patentinhaber: Kalle GmbH, 65203 Wiesbaden (DE)
(72) Erfinder: Hammer, Klaus-Dieter, Dr. Dipl.-Chem., 55120 Mainz (DE); Ahlers, Michael, Dipl.-Chem., 55122 Mainz (DE); Krams, Theo, 65399 Kiedrich (DE)
(74) Vertreter: Plate, Jürgen

(56) Entgegenhaltungen:
- EP-A- 0 109 611
- EP-A- 0 180 207
- EP-A- 0 462 393
- EP-A- 0 468 284
- EP-A- 0 502 431
- EP-A- 0 502 432
- DE-A- 2 409 612
- DE-A- 3 447 026
- DE-A- 4 407 288
- DE-A1- 2 827 862
- GB-A- 1 042 182
- US-A- 3 442 663
- US-A- 3 753 740
- US-A- 3 898 348
- US-A- 4 781 931

## Beschreibung

Die Erfindung betrifft eine schlauchförmige Nahrungsmittelhülle auf der Basis von Cellulosehydrat, die auf ihrer inneren Oberfläche mit einer Trennpräparation imprägniert oder beschichtet ist.

Brät- und Fleischsorten, die relativ viel Eiweiß und wenig Fett enthalten, haften besonders fest an Nahrungsmittelhüllen auf der Basis von regenerierter Cellulose. Um die Haftung zu vermindern und damit die Hülle leichter abziehen zu können, wurden verschiedene Trennpräparationen entwickelt, die auf die innere Oberfläche der Hülle aufgetragen werden.

So ist in der DE-A 966 194 eine reaktive Präparation beschrieben, die N-Alkylethylenimine oder Alkylisocyanate enthält. Die Ethylenimin- bzw. Isocyanatgruppen reagieren mit Hydroxygruppen der Cellulose, so daß der Wirkstoff fest mit dem Hüllenmaterial verbunden ist. In der US-A 2 901 358 ist eine Wursthülle auf Cellulosebasis beschrieben, die mit einem Chromfettsäurekomplex imprägniert ist. Diketene sind in der Imprägnierung gemäß der DE-A 14 92 699 enthalten. Sie werden im Gemisch mit niederen Alkylcellulosen auf die Innenseite der Wursthülle aufgetragen, vorzugsweise in Form einer wäßrigen Emulsion. Da die genannten Verbindungen mit der Cellulose reagieren und daher fest mit den Hüllen verbunden sind, lassen sie sich zwar relativ leicht vom Wurstbrät abziehen, aber die damit hergestellten Innenbeschichtungen sind oft nicht gleichmäßig dick und nicht durchgehend. Als Folge davon ist auch die Trennwirkung ungleichmäßig.

Bekannt sind ferner nicht-reaktive Trennpräparationen. Gemäß der DE-A 25 46 681 wird auf die Innenseite der Hülle ein im wesentlichen homogenes Gemisch aus einem wasserlöslichen Celluloseether, Mono- und Diglyceriden der Ölsäure sowie gegebenenfalls einem partialen Fettsäureesters des Sorbitans oder Mannitans aufgetragen und getrocknet. In ähnlicher Weise wird gemäß der DE-A 23 00 338 auf die Innenseite der Cellulosehülle ein Gemisch aufgebracht aus einem Mineralöl, einem acetylierten Fettsäure-monoglycerid und einem acetylierten, oberflächenaktiven Mittel, das in dem Mineralöl nur wenig löslich ist.

Die DE-A 28 53 269 lehrt eine Innenbeschichtung aus einem wasserlöslichen Celluloseether und einem Polyalkylenpolyamin oder dessen Salzen und/oder einem Reaktionsprodukt eines Epichlorhydrins mit einem Polyamid, eines modifizierten Melamins mit Formaldehyd und/oder eines modifizierten Harnstoffs mit Formaldehyd, wobei diese Harze in Wasser löslich oder dispergierbar sind. Die Trennwirkung, die sich mit den bisher bekannten reaktiven wie auch nicht reaktiven Trennpräparationen erreichen läßt, reicht jedoch für etliche Wurstsorten, insbesondere für Blutwurst, nach wie vor nicht aus. Stellenweise bleibt die Hülle an der Brätoberfläche hängen, so daß beim Abschälen Brät- bzw. Fleischteile herausgerissen werden. Das ist besonders problematisch bei Stapelaufschnitt. Denn dabei wird die Wurst auf automatischen Anlagen geschält, bevor sie in Scheiben geschnitten wird. Moderne Schälvorrichtungen arbeiteten mit hoher Geschwindigkeit. Ein Herausreißen von Brätteilen würde zu ernsthaften Produktionsstörungen führen. Ferner müssen die Wursthüllen so beschaffen sein, daß sie sich auch vom Zipfelbereich der Wurst problemlos abschälen lassen. Bei Dauerwurst darf die Trennwirkung aber nicht zu groß sein, da sonst die Gefahr besteht, daß sich die Hülle während der Reifedauer der Wurst ( etwa 18 Tage) vom Brät löst ("abstellt").

In DE-A 34 47 026 ist eine schlauchförmige Nahrungsmittelhülle auf Cellulosebasis offenbart, die auf der Innenseite mit einer Trennpräparation für Blutwurstbrät beschichtet oder imprägniert ist. Die Trennpräparation enthält neben einem Chromfettsäure-Komplex als wesentlichen Bestandteil ein nichtreaktives Dialkylpolysiloxan, d.h, ein Silikonöl. Gegebenenfalls kann sie zusätzlich noch einen wasserlöslichen Celluloseether und/oder Stärkeether und/oder ein Wachs enthalten.

In der EP 0 180 207 ist eine Innenpräparation für schlauchförmige Hüllen auf Cellulosebasis offenbart, die aus den Hüllen hergestellte Raffraupen stabilisiert und das Entraffen erleichtert. Darüber hinaus soll die Innenpräparation auch noch die Schälbarkeit verbessern. Die Präparation umfaßt einen anionischen sowie einen nichtionischen wasserlöslichen Celluloseether und ein Gleitmittel, das ein tierisches oder pflanzliches Öl, ein Mineralöl, ein Silikonöl ein acetyliertes Monoglycerid, ein Polyoxyethylen-monoester und/oder Sorbitan-trioleat ist.

Die Wursthülle auf Cellulosebasis gemäß EP-A 0 109 611 ist auf der Innenseite mit einer Imprägnierung zur Verbesserung der Schälbarkeit versehen. Bestandteile dieser Imprägnierung sind a) ein wasserlöslicher Celluloseether und/oder ein wasserlöslicher Stärkeether und b) ein Wachs, wie Montanwachs oder Bienenwachs. Als dritte Komponente kann die Imprägnierung noch nicht reaktives Silikonöl oder ein Pflanzenöl enthalten.

Aufgabe der Erfindung war es, eine Nahrungsmittelhülle herzustellen, die sich leicht schälen läßt. Die bessere Trennwirkung soll mit Beschichtungszusammensetzungen bzw. -präparationen erreicht werden, die leicht zu handhaben sind. Beim Wässern der Hüllen vor dem Füllen soll möglichst wenig von der Präparation verloren gehen. Die Trennwirkung soll auch für eiweißreiche und fettarme Brät- oder Fleischsorten, wie Blutwurst, Geflügelbrühwurst, Lachsschinken und Geflügelbrust, ausreichen.

Gelöst wurde die Aufgabe durch die Kombination einer nicht-reaktiven mit einer reaktiven Trennkomponente und einem Öl oder Lecithin.

Gegenstand der vorliegenden Erfindung ist demgemäß eine schlauchförmige Nahrungsmittelhülle auf der Basis von Cellulosehydrat, die auf ihrer inneren Oberfläche mit einer Trennpräparation imprägniert oder beschichtet ist, **dadurch gekennzeichnet, daß** die Trennpräparation
a) eine reaktive Hydrophobierkomponente, die ein Diketen mit langkettigen (C₁₀-C₂₆)Alkylresten, ein (C₁₀-C₂₆)Alkylisocyanat oder ein reaktives Silikon ist,
b) eine nicht-reaktive Trennkomponente und
c) ein natürliches Öl, ein synthetisches Triglycerid aus mittleren Fettsäuren, ein Paraffinöl oder Lecithin
umfaßt. Als reaktive Hydrophobierkomponente a) gut geeignet ist ein Alkyldiketen mit 7,6 % Feststoffanteil und einen Ketendimeranteil von 6 Gew.-%.

Die nicht-reaktive Trennkomponente b) ist bevorzugt ein Cellulosederivat, insbesondere Carboxymethyl-, Hydroxyethyl- oder Methylhydroxyethyl-cellulose, ein Alginat oder Chitosan.

Die Komponente c) ist bevorzugt ein natürliches Öl, insbesondere Olivenöl, Sonnenblumenöl oder Rapsöl, ein synthetisches Triglycerid aus mittleren Fettsäuren (das sind solche mit 6 bis 12 Kohlenstoffatomen) oder ein Paraffinöl. Das Öl bzw. Lecithin bewirkt eine gleichmäßige Verteilung der Trennpräparation auf der inneren Oberfläche der Hülle. Es erleichtert auch das Raffen und Verarbeiten der Hülle.

Die Trennpräparation wird in einer solchen Menge auf die innere Oberfläche der Nahrungsmittelhülle auf Cellulosebasis aufgetragen, daß die fertige Hülle je Quadratmeter 50 bis 350 mg, bevorzugt 70 bis 250 mg, an reaktiver Hydrophobierkomponente a), 30 bis 300 mg, bevorzugt 50 bis 150 mg, an nicht-reaktiver Trennkomponente b) und 50 bis 700 mg, bevorzugt 80 bis 300 mg, an Öl- oder Lecithin-Komponente enthält.

Die Komponenten a), b) und c) wirken in synergistischer Weise zusammen und bewirken dadurch einen bisher unerreichten Trenneffekt, wie er für besonders stark haftende Füllgüter gefordert wird. Die Einzelkomponenten allein liefern dagegen nicht den gewünschten Effekt. Es wird vermutet, daß die mit der Cellulose reagierende Komponente a) die innere Oberfläche modifiziert, daß sich die nicht-reaktive Komponente b) und das Öl oder Lecithin c) gleichmäßig darauf verteilen und gleichzeitig gebunden werden. Dabei ist es wichtig, daß alle drei Komponenten zusammen und nicht etwa nacheinander aufgebracht werden.

Zur Herstellung der erfindungsgemäßen Nahrungsmittelhülle werden die Komponenten a), b) und c) miteinander vermischt und in Form einer wäßrigen Zubereitung auf die innere Oberfläche aufgebracht. Zweckmäßigerweise wird das Öl oder das Lecithin vorher in eine stabile Öl-in-Wasser-Emulsion überführt, vorzugsweise durch Homogenisieren. Als Emulgatoren eignen sich lebensmittelrechtlich zugelassene Alkyl- oder Alkylaryl-sulfonate oder -sulfate, nichtionogene Ethoxylate von Fettalkoholen (das sind einwertige Alkohole mit 8 bis 22 Kohlenstoffatomen in geraden Ketten) oder von Fettaminen (das sind Gemische langkettiger, überwiegend primärer Alkylamine) sowie Monofettsäureester von mehrwertigen Alkoholen (beispielsweise Sorbit-monooleylester). Sie werden allgemein in einem Anteil von 0,5 bis 10 Gew.-%, bevorzugt 1 bis 5 Gew.-%, jeweils bezogen auf das Gewicht des Öls oder Lecithins, eingesetzt. Die Komponenten a) und b) werden in Wasser gelöst oder emulgiert und mit der Emulsion der Komponente c) vermischt.

In der wäßrigen Präparationsmischung hat die reaktive Komponente a) einen Anteil von 0,5 bis 10,0 Gew.-%, bevorzugt 1,0 bis 6,0 Gew.-%, jeweils bezogen auf das Gesamtgewicht der Mischung. Der Anteil der nicht-reaktiven Komponente b) ist allgemein etwas geringer. Er liegt bei 0,5 bis 5,0 Gew.-%, bevorzugt 1,0 bis 3,0 Gew.-%, wiederum bezogen auf das Gesamtgewicht der Mischung. Der Anteil an Öl bzw. Lecithin schließlich beträgt allgemein 1,0 bis 20,0 Gew.-%, bevorzugt 2,0 bis 12,0 Gew.-%. Die Mischung kann ferner weitere übliche Additive enthalten, insbesondere sekundäre Weichmacher, wie Glycerin. Der Anteil an Weichmacher beträgt allgemein 5 bis 20 Gew.-%, bevorzugt 8 bis 15 Gew.-%. Er sollte möglichst dem bereits in dem Schlauch enthaltenen Anteil an sekundärem Weichmacher entsprechen, damit sich ein Gleichgewichtszustand einstellt.

Die so hergestellte Präparation wird dann in den Cellulose-Gelschlauch eingefüllt, nachdem dieser bereits die Fäll- und Wasch- und Weichmacherbäder durchlaufen hat und bevor er die Trocknerstufe erreicht. Die Präparation wird dabei in einer kontinuierlich neu gebildeten Schlaufe des Gelschlauches gehalten (diese Art der Beschichtung ist allgemein bekannt als "slug coating"). Die präparierten Schläuche werden dann wie üblich in aufgeblasenem Zustand und waagerecht im Trockner bei 90 bis 130 °C getrocknet, anschließend auf bis auf die gewünschte Endfeuchte (üblicherweise etwa 8 bis 10 %) befeuchtet und aufgewickelt.

In einer bevorzugten Ausführungsform besitzt der erfindungsgemäß innenpräparierte Celluloseschlauch eine Innenverstärkung aus Fasermaterial, insbesondere aus Hanffasern. Bei dessen Herstellung wird üblicherweise zunächst das Fasermaterial zu einem Schlauch geformt, der dann von innen oder außen oder von beiden Seiten mit Viskose beaufschlagt wird (daher als innen-, außen-oder doppelviskosierter Schlauch bezeichnet). Der gegebenenfalls faserverstärkte Cellulose-Gelschlauch wird nach üblichen und dem Fachmann bekannten Verfahren hergestellt. Geeignet sind insbesondere das Viskose- und das N-Methyl-morpholin-N-oxid (NMMO)-Verfahren. In dem erstgenannten Verfahren wird die Cellulose in Cellulose-xanthogenat umgewandelt, das anschließend im Fällbad wieder zu Cellulose regeneriert wird. In dem NMMO-Verfahren wird die Cellulose dagegen in chemisch unveränderter Form in dem NMMO gelöst.

Die folgenden Beispiele erläutern die Erfindung. Prozente sind Gewichtsprozente, soweit nicht anders angegeben.

### Beispiel 1:

In einen außenviskosierten Cellulosehydrat-Gelschlauch mit einem Durchmesser von 90 mm (= Kaliber 90) wurden vor dem Einlauf in den Trockner etwa 12 Liter der folgenden Mischung eingefüllt:

| | |
|---|---|
| 30 l | Alkyldiketen in Wasser (Anteil an Alkyldiketen: 7,6 %), |
| 6 l | Glycerin, |
| 0,45 l | 4%ige wäßrige NaOH, |
| 0,12 kg | Carboxymethylcellulose, |
| 0,24 l | einem synthetischen Triester aus Glycerin und (C₈-C₁₀)- |
| | Fettsäuren (eingesetzt wurde eine 50 %ige Emulsion) und |
| 23,3 l | Wasser. |

Die Trennpräparation enthielt demgemäß 3,8 % Alkyldiketen, 10,0 % Glycerin, 2,0 % Carboxymethylcellulose und 2,0 % Triglycerid. Der Schlauch wird wie üblich in aufgeblasenem Zustand getrocknet, anschließend befeuchtet bis auf 8 bis 10 % Restfeuchte und aufgewickelt. Nach etwa 3 Wochen Lagerung in Form von einseitig abgebundenen Abschnitten oder in aufgestockter Form als Raffraupe wurden die Hüllen mit Thüringer Blutwurst gefüllt, gekocht und anschließend geräuchert. Die Hülle ließ sich danach mühelos abziehen, ohne daß Brätreste daran haften blieben. Die Wurst ließ sich daher ohne Probleme zu Stapelaufschnitt verarbeiten.

### Beispiel 2: (nicht erfindungsgemäß)

In einen außenviskosierten Cellulosehydratgelschlauch vom Kaliber 140 wurden vor dem Einlauf in den Trockner etwa 22 Liter der folgenden Zusammensetzung eingefüllt:

| | |
|---|---|
| 15 l | Chromfettsäurekomplex (das Handelsprodukt war 1 : 10 mit Wasser verdünnt), |
| 9 l | Glycerin, |
| 0,12 kg | Hydroxyethylcellulose, |
| 0,36 l | einem synthetischen Triester aus Glycerin und (C₈-C₁₀)-Fettsäuren (eingesetzt wurde eine 50 %ige Emulsion) und |
| 35,64 l | Wasser. |

Die Trennpräparation enthielt demgemäß 0,65 % Chromfettsäurekomplex, 15,0 % Glycerin, 2,0 % Hydroxyethylcellulose und 3,0 % Triglycerid.

Der Schlauch wurde wie üblich in aufgeblasenem Zustand getrocknet, anschließend auf eine Endfeuchte von 8 bis 10 % mit Wasser befeuchtet und aufgewickelt.

Mit einer Futuba-Füllvorrichtung wurde dann magerer Kochschinken eingefüllt. Nach dem Brühen und Räuchern ließ sich die Hülle über die gesamte Länge leicht abziehen.

### Beispiel 3: (nicht erfindungsgemäß)

In einen außenviskosierten Cellulosehydratgelschlauch vom Kaliber 75 wurden vor dem Einlauf in den Trockner etwa 10 Liter der folgenden Zusammensetzung eingefüllt:

| | |
|---|---|
| 176 l | Wasser, |
| 20 l | Glycerin, |
| 2 l | Chromfettsäurekomplex, |
| 2 l | Lecithin, |
| 3 l | einer 10 %igen wäßrigen NaOH-Lösung, |
| 33 l | Hydroxyethylcellulose (eingesetzt wurde eine 20 %ige wäßrige Lösung) und |
| 14 l | Siliconöl-Emulsion E2 (40 %ig). |

Die Trennpräparation enthielt demgemäß 2,1 % Chromfettsäurekomplex, 8,0 % Glycerin, 2,64 % Hydroxyethylcellulose und 2,2 % Siliconöl.

Der Schlauch wurde wie üblich in aufgeblasenem Zustand getrocknet, anschließend mit Wasser auf eine Endfeuchte von 8 bis 10 % befeuchtet und aufgewickelt. In einem weiteren Verarbeitungsschritt wurde der Schlauch dann mit Wasser eingesprüht bis er einen Feuchtegehalt von 16 bis 18 % aufwies und dann gerafft. Der Schlauch wurde dann zur Umhüllung von Lachsschinken eingesetzt. Nach dem Brühen und Räuchern konnte die schlauchförmige Hülle problemlos abgeschält werden. Ein unerwünschtes Haften an dem mageren Schinken konnte nicht festgestellt werden.

### Vergleichsbeispiel:

In einen außenviskosierten Cellulosehydrat-Gelschlauch mit einem Durchmesser von 90 mm (= Kaliber 90) wurden vor dem Einlauf in den Trockner etwa 12 Liter einer Mischung aus

| | |
|---|---|
| 30 l | Alkyldiketen in Wasser (Anteil an Alkyldiketen: 7,6 %), |
| 6 l | Glycerin, |
| 0,45 l | 4%ige wäßrige NaOH, |
| 0,12 kg | Carboxymethylcellulose und |
| 23,3 l | Wasser |

eingefüllt. Die Trennpräparation enthielt demgemäß 3,8 % Alkyldiketen, 10,0 % Glycerin und 2,0 % Carboxymethylcellulose. Der Schlauch wurde wie üblich in aufgeblasenem Zustand getrocknet, anschließend befeuchtet bis auf 8 bis 10 % Restfeuchte und aufgewickelt. Nach etwa 3 Wochen Lagerung in Form von einseitig abgebundenen Abschnitten oder in aufgestockter Form als Raffraupe wurden die Hüllen mit Thüringer Blutwurst gefüllt, gekocht und anschließend geräuchert. Beim Abziehen der Hülle blieben stellenweise Brätreste (vor allem Schwarten) hängen.

## Patentansprüche

1. Schlauchförmige Nahrungsmittelhülle auf der Basis von Cellulosehydrat, die auf ihrer inneren Oberfläche mit einer Trennpräparation imprägniert oder beschichtet ist, **dadurch gekennzeichnet, daß** die Trennpräparation
a) eine reaktive Hydrophobierkomponente, die ein Diketen mit langkettigen (C₁₀-C₂₆)Alkylresten, ein (C₁₀-C₂₆)Alkylisocyanat oder ein reaktives Silikon ist,
b) eine nicht-reaktive Trennkomponente und
c) ein natürliches Öl, ein synthetisches Triglycerid aus mittleren Fettsäuren, ein Paraffinöl oder Lecithin
umfaßt.

2. Hülle gemäß Anspruch 1, **dadurch gekennzeichnet, daß** die nicht-reaktive Trennkomponente b) ein Cellulosederivat, bevorzugt Carboxymethyl-, Hydroxyethyl- oder Methylhydroxyethyl-cellulose, ein Alginat oder Chitosan ist.

3. Hülle gemäß Anspruch 1 oder 2, **dadurch gekennzeichnet, daß** das natürliches Öl Olivenöl, Sonnenblumenöl oder Rapsöl ist.

4. Hülle gemäß einem oder mehreren der Ansprüche 1 bis 3, **dadurch gekennzeichnet, daß** sie pro Quadratmeter 50 bis 350 mg, bevorzugt 70 bis 250 mg, an reaktiver Hydrophobierkomponente a), 30 bis 300 mg, bevorzugt 50 bis 150 mg, an nicht-reaktiver Trennkomponente b) und 50 bis 700 mg, bevorzugt 80 bis 300 mg, an Öl- oder Lecithin-Komponente c) enthält.

5. Hülle gemäß einem oder mehreren der Ansprüche 1 bis **4, dadurch gekennzeichnet, daß** das Öl oder das Lecithin in der Trennpräparation in emulgierter Form vorliegen.

6. Hülle gemäß Anspruch 5, **dadurch gekennzeichnet, daß** als Emulgatoren Alkyl- oder Alkylaryl-sulfonate, nicht ionogene Ethoxylate von Fettalkoholen oder von Fettaminen oder Monofettsäureester von mehrwertigen Alkoholen eingesetzt werden.

7. Hülle gemäß einem oder mehreren der Ansprüche 1 bis 6, **dadurch gekennzeichnet, daß** in der auf die innere Oberfläche der Hülle aufzutragenden Trennpräparation die reaktive Hydrophobierkomponente a) einen Anteil von 0,5 bis 10 Gew.-%, bevorzugt 1,0 bis 6,0 Gew.-%, die nicht-reaktive Trennkomponente b) einen Anteil von 0,5 bis 5,0 Gew.-%, bevorzugt 1,0 bis 3,0 Gew.-%, und die Öl- oder Lecithin-Komponente c) einen Anteil von 1,0 bis 20,0 Gew.-%, bevorzugt 2,0 bis 12,0 Gew.-%, aufweist, jeweils bezogen auf das Gesamtgewicht der Präparation.

8. Hülle gemäß Anspruch 7, **dadurch gekennzeichnet, daß** die Trennpräparation weitere Additive enthält, bevorzugt sekundäre Weichmacher, wie Glycerin.

9. Hülle gemäß Anspruch 8, **dadurch gekennzeichnet, daß** der Anteil an sekundärem Weichmacher 5 bis 20 Gew.-%, bevorzugt 8 bis 15 Gew.-% beträgt, bezogen auf das Gesamtgewicht der Trennpräparation.

## Claims

1. A tubular food casing based on cellulose hydrate which is impregnated or coated on its inner surface with a release preparation, wherein the release preparation comprises
a) a reactive hydrophobicizing component which is a diketene having long-chain (C₁₀-C₂₆) alkyl radicals, a (C₁₀-C₂₆)alkyl isocyanate or a reactive silicone,
b) a non-reactive release component and
c) a natural oil, a synthetic triglyceride of medium-chain fatty acids, a paraffin oil or lecithin.

2. The casing as claimed in claim 1, wherein the non-reactive release component b) is a cellulose derivative, preferably carboxymethyl cellulose, hydroxyethyl cellulose or methylhydroxyethyl cellulose, an alginate or chitosan.

3. The casing as claimed in claim 1 or 2, wherein the natural oil is olive oil, sunflower seed oil or rapeseed oil.

4. The casing as claimed in one or more of claims 1 to 3, wherein it comprises, per square meter, from 50 to 350 mg, preferably from 70 to 250 mg, of reactive hydrophobicizing component a), from 30 to 300 mg, preferably from 50 to 150 mg, of non-reactive release component b) and from 50 to 700 mg, preferably from 80 to 300 mg, of oil component or lecithin component c).

5. The casing as claimed in one or more of claims 1 to 4, wherein the oil or the lecithin are present in the release preparation in emulsified form.

6. The casing as claimed in claim 5, wherein the emulsifiers used are alkylsulfonates or alkylarylsulfonates, nonionic ethoxylates of fatty alcohols or of fatty amines, or monoesters of fatty acids and polyhydric alcohols.

7. The casing as claimed in one or more of claims 1 to 6, wherein, in the release preparation to be applied to the inner surface of the casing, the content of the reactive hydrophobicizing component a) is from 0.5 to 10% by weight, preferably from 1.0 to 6.0% by weight, the content of the non-reactive release component b) is from 0.5 to 5.0% by weight, preferably from 1.0 to 3.0% by weight, and the content of the oil component or lecithin component c) is from 1.0 to 20.0% by weight, preferably from 2.0 to 12.0% by weight, in each case based on the total weight of the preparation.

8. The casing as claimed in claim 7, wherein the release preparation comprises other additives, preferably secondary plasticizers, such as glycerol.

9. The casing as claimed in claim 8, wherein the content of secondary plasticizer is from 5 to 20% by weight, preferably from 8 to 15% by weight, based on the total weight of the release preparation.

## Revendications

1. Enveloppe tubulaire pour denrées alimentaires à base d'hydrate de cellulose, qui est imprégnée ou revêtue, sur sa surface interne, d'une préparation de séparation, **caractérisée en ce que** la préparation de séparation comprend :
a) un composant d'hydrophobisation réactif, qui est un dicétène avec des radicaux alkyle à chaîne longue en C₁₀-C₂₆, un isocyanate d'alkyle en C₁₀-C₂₆ ou un silicone réactif,
b) un composant de séparation non réactif et
c) une huile naturelle, un triglycéride synthétique d'acides gras moyens, une huile de paraffine ou de la lécithine.

2. Enveloppe selon la revendication 1, **caractérisée en ce que** le composant de séparation non réactif b) est un dérivé de cellulose, de préférence les carboxyméthyl-, hydroxyéthyl- ou méthylhydroxy-éthylcelluloses, un alginate ou un chitosane.

3. Enveloppe selon la revendication 1 ou 2, **caractérisée en ce que** l'huile naturelle est l'huile d'olive, l'huile de tournesol ou l'huile de colza.

4. Enveloppe selon une ou plusieurs des revendications 1 à 3, **caractérisée en ce qu'**elle contient par mètre carré 50 à 350 mg, de préférence 70 à 250 mg de composant d'hydrophobisation réactif a), 30 à 300 mg, de préférence 50 à 150 mg, de composant de séparation non réactif b) et 50 à 700 mg, de préférence 80 à 300 mg, de composant d'huile ou de lécithine c).

5. Enveloppe selon une ou plusieurs des revendications 1 à 4, **caractérisée en ce que** l'huile ou la lécithine se présentent sous forme émulsionnée dans la préparation de séparation.

6. Enveloppe selon la revendication 5, **caractérisée en ce que** l'on utilise comme émulsionnants des sulfonates d'alkyle ou d'alkylaryle, des éthoxylates non ionogènes d'alcools gras ou d'amines grasses ou des monoesters d'acides gras d'alcools polyvalents.

7. Enveloppe selon une ou plusieurs des revendications 1 à 6, **caractérisée en ce que**, dans la préparation de séparation à appliquer à la surface interne de l'enveloppe, le composant d'hydrophobisation réactif a) est présent en fraction de 0,5 à 10 % en poids, de préférence 1,0 à 6,0 % en poids, le composant de séparation non réactif b) en fraction de 0,5 à 5,0 % en poids, de préférence 1,0 à 3,0 % en poids, et le composant d'huile ou de lécithine c) en fraction de 1,0 à 20,0 % en poids, de préférence 2,0 à 12,0 % en poids, respectivement, par rapport au poids total de la préparation.

8. Enveloppe selon la revendication 7, **caractérisée en ce que** la préparation de séparation contient d'autres additifs, de préférence des plastifiants secondaires, tels que la glycérine.

9. Enveloppe selon la revendication 8, **caractérisée en ce que** la fraction de plastifiant secondaire représente 5 à 20 % en poids, de préférence 8 à 15 % en poids, par rapport au poids total de la préparation de séparation.
